# EUROPÄISCHE PATENTANMELDUNG

(11) **EP 0 753 287 A2**
(43) Veröffentlichungstag der Anmeldung: **15.01.1997**
(21) Anmeldenummer: 96108040.5
(22) Anmeldetag: 21.05.1996
(51) Int. Cl.: A61C 19/00

(54) **Handpolymerisationsgerät**

(30) Priorität: 12.07.1995 DE 19525366
(71) Anmelder: HERAEUS KULZER GMBH, 63450 Hanau (DE)
(72) Erfinder: Oppawsky, Steffen, 61350 Bad Homburg (DE); Schödel, Dieter, Dr., 65193 Wiesbaden (DE)
(74) Vertreter: Kühn, Hans-Christian

(57) **Zusammenfassung**

Die Erfindung betrifft ein Handpolymerisationsgerät zur Polymerisation von Kunststoffen, insbesondere von Dentalkunststoffen, mit einem Gehäuse, in dem eine Lichtquelle und ein Gebläse angeordnet sind und das eine Lichtaustrittsöffnung zum Aussenden des von der Lichtquelle erzeugten Lichts sowie Öffnungen zum Ein- und Auslaß von Kühlluft aufweist. Um bei der Bedienung des Polymerisationsgerätes eine Beeinträchtigung der Bedienperson durch erhitzte Kühlluft zu vermeiden, weisen die Auslaßöffnungen für Kühlluft Luftleitelemente auf, die in ihrer Lage zum Gehäuse beweglich angeordnet sind.

## Beschreibung

Die Erfindung betrifft ein Handpolymerisationsgerät zur Polymerisation von Kunststoffen, insbeondere von Dentalkunststoffen, mit einem Gehäuse, in dem eine Lichtquelle und ein Gebläse angeordnet sind und das eine Lichtaustrittsöffnung zum Aussenden des von der Lichtquelle erzeugten Lichts sowie Öffnungen zum Ein- und Auslaß von Kühlluft aufweist.

Ein derartiges Handpolymerisationsgerät ist beispielsweise aus der DE 34 11 996 A1 bekannt. Dieses Polymerisationsgerät weist eine Halogen-Reflektorlampe auf, deren Licht über einen Lichtleiter auf das zu polymerisierende Material gelenkt wird. Der Lichtleiter ist in dem Gehäuse des Polymerisationsgerätes gehaltert. Ein großer Teil der von der Lichtquelle verbrauchten Energie wird in Wärmeenergie umgewandelt, die zu einer Aufheizung des Gehäuses führt. Um eine zu starke Aufheizung des Polymerisationsgerätes und damit eine Zerstörung des gesamten Gerätes oder empfinderlicher Teile des Gerätes zu verhindern, wird die Lichtquelle gekühlt. Zu diesem Zweck sind Öffnungen vorgesehen, durch die Kühlluft von außen an die Lichtquelle und von dort wieder nach außen geführt werden kann. Die Luftströmung wird durch ein Gebläse mit einem Lüfterrad erzeugt. Durch den Luftstrom wird die von der Lichtquelle gebildete Wärme aus dem Gehäuse herausgeblasen, so daß zum einen eine Zerstörung des Polymerisationsgerätes durch Überhitzung verhindert wird und zum anderen sich die Oberfläche des Gehäuses nicht zu stark erwärmt. Dies ist wichtig, da zumindest ein Teil des Gehäuses von Handpolymerisationsgeräten naturgemäß als Griffstück ausgebildet ist, an dem das Polymerisationsgerät von einer Bedienperson erfaßt und geführt wird. Die Richtung des Warmluftstromes wird bestimmt durch die Gestaltung der Auslaßöffnungen der Kühlluft. Diese Auslaßöffnungen sind an der Stirnseite des hinteren Gehäuseteiles angeordnet, das gegenüber dem übrigen Gehäuse leicht abgewinkelt ist. Bei der Handhabung des Polymerisationsgerätes kann sich dessen Lage zur Bedienperson ändern, beispielsweise, wenn während des Polymerisierens unterschiedlicher Stellen an einem Gebiß eine entsprechende Lageänderung des Polymerisationsgerätes notwendig wird. Eine unterschiedliche Lage der Auslaßöffnungen zum Körper der Bedienperson ergibt sich auch bei einem Wechsel des Polymerisationsgerätes von der rechten in die linke Hand (beispielsweise bei der Benutzung des Polymerisationsgerätes durch Linkshänder). Durch eine derartige Lageänderung ändert sich auch die Austrittsrichtung der Kühlluft. Sie kann dabei unter Umständen direkt auf Patienten oder Bedienpersonen gerichtet sein. Dies ist jedoch in der Regel unerwünscht und kann im Extremfall zu Schädigungen durch Hitzeeinwirkung führen.

Ausgehend von dem bekannten Stand der Technik liegt der Erfindung die Aufgabe zugrunde, ein Handpolymerisationsgerät zu schaffen, mit dem eine Beeinträchtigung der Bedienperson durch erhitzte Kühlluft vermieden wird.

Erfindungsgemäß wird die Aufgabe dadurch gelöst, daß die Auslaßöffnungen für Kühlluft Luftleitelemente aufweisen, die in ihrer Lage zum Gehäuse beweglich angeordnet sind. Dadurch kann die aus dem Polymerisationsgerät austretende erwärmte Kühlluft in eine solche Richtung gelenkt werden, in der sich keine Personen oder vor Wärmeeinwirkung zu schützende Gegenstände befinden. Es ist auf diese Weise beispielsweise möglich, daß das Polymerisationsgerät sowohl von Rechtshändern als auch von Linkshändern gleichermaßen benutzt werden kann. Unerheblich ist es, ob der Austritt der Kühlluft durch eine oder mehrere Auslaßöffnungen erfolgt. Wesentlich ist die Möglichkeit, die Richtung der ausströmenden Kühlluft zu lenken. Zweckmäßigerweise sind die Luftleitelemente der Auslaßöffnungen an einem Ende des Gehäuses angeordnet, daß der der Aussendung des Lichts dienenden Öffnung gegenüberliegt. Insbesondere ist es vorteilhaft, daß die Luftleitelemente schräg zu der Längsachse des Gehäuses angeordnet sind, um den Luftstrom aus der Gehäuseachse heraus zu lenken. Dadurch kann die Richtung der Kühlluft stark eingegrenzt werden.

Zweckmäßig ist es, daß mehrere Luftleitelemente etwa parallel zueinander angeordnet sind; dadurch kann der Luftstrom relativ genau geführt werden.

Für einen einfachen Aufbau beweglicher Luftleitelemente ist es vorteilhaft, daß die Luftleitelemente auf einem gemeinsamen Rahmen angeordnet sind, der an der Auslaßöffnung für Kühlluft drehbar angeordnet ist. Insbesondere können die Luftleitelemente starr auf dem Rahmen angeordnet sein. Durch eine derartige Anordnung der Luftleitelemente kann der Strom der Kühlluft durch einfaches Drehen des Rahmens gelenkt werden. Eine solche Anordnung ist relativ stabil und kostengünstig zu fertigen. Für die optimale Ausnutzung der das Gehäuse durchströmenden Kühlluft ist es vorteilhaft, daß das Gebläse zwischen Lichtquelle und Auslaßöffnungen für Kühlluft angeordnet ist.

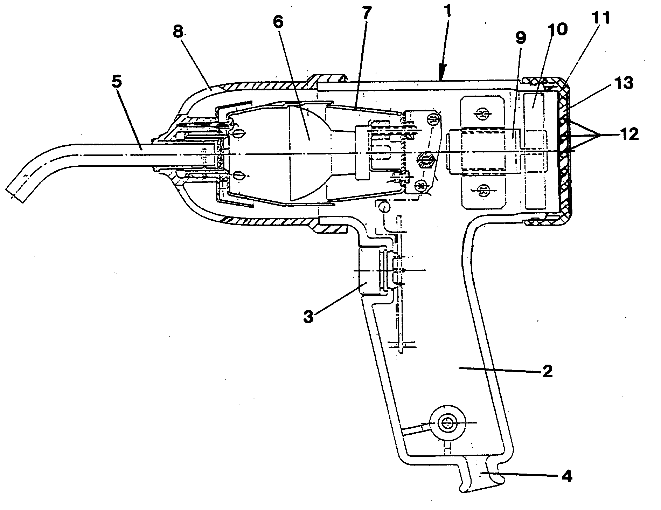

Nachfolgend wird ein Ausführungsbeispiel der Erfindung anhand einer Zeichnung näher erläutert. Die Zeichnung zeigt eine schematisierte Schnittdarstellung eines erfindungsgemäßen Handpolymerisationsgerätes.

Das in der Zeichnung dargestellte Handpolymerisationsgerät weist ein Gehäuse 1 auf, das im wesentlichen zylindenförmig ausgebildet ist und an dessen Unterseite ein Handgriff 2 mit einem Schalter 3 und einem elektrischen Anschluß 4 angeformt ist.

Das eine Ende des zylindrischen Teils des Gehäuses 1 ist als Lichtaustrittsöffnung ausgebildet, in der ein Lichtleiter 5 angeordnet ist, der das von der in dem Gehäuse angeordneten Lichtquelle 6 ausgesandte Licht aufnimmt und an den zu bestrahlenden Ort leitet. Die Lichtquelle 6 weist dazu einen innerhalb der Lichtquellenhalterung 7 angeordneten Reflektor auf. Um den Lichtleiter 5 herum sind im Gehäuse 1 Einlaßöffnungen 8 für Kühlluft angeordnet. An dem dem Lichtleiter 5 abgewandten Ende der Lichtquellenhalterung 7 ist das Gebläse, bestehend aus Gebläsemotor 9 und Lüfterrad 10 vor dem zweiten Ende des zylindrischen Teils des Gehäuses 1 angeordnet. Dieses zweite Ende wird durch einen Rahmen 11 abgeschlossen, in dem Luftleitelemente 12 angeordnet sind. Die Luftleitelemente 12 sind als schräg zu der Längsachse des Gehäuses 1 angeordnete Lamellen ausgebildet, zwischen denen sich die Luftauslaßöffnungen 13 befinden. Der Rahmen 11 umgreift das Ende des Gehäuses 1 und kann auf dem Gehäuse 1 um dessen Längsachse herum gedreht werden. Der Rahmen 11 mit den Luftleitelementen 12 kann als Spritzgußteil kostengünstig gefertigt werden. Durch Drehung des Rahmens 11 wird der Kühlluftstrom durch die Luftleitelemente 12 in die gewünschte Richtung gelenkt. Dadurch kann vermieden werden, daß die Bedienperson, der Patient oder vor Wärmeeinfluß zu schützende Gegenstände von dem Kühlluftstrom getroffen werden. Bei einer Änderung der Lage des Handpolymerisationsgerätes kann die Richtung des Kühlluftstromes durch einfaches Drehen des Rahmens 11 entsprechend nachgestellt werden.

Prinzipiell ist es auch möglich, Luftleitelemente 12 beweglich, beispielsweise als Klappen, auf einem beweglichem oder feststehenden Rahmen anzuordnen. Die Zahl der Luftleitelemente 12 ist variierbar, es genügt unter Umständen ein einziges. Auch die Zahl der Luftaustrittsöffnungen 13 ist beliebig.

Bei der beschriebenen Anordnung ist die die Wärme erzeugende Lichtquelle 6 zwischen den Einlaßöffnungen 8 und den Auslaßöffnungen 13 derart angeordnet, daß die Kühlluft die Lichtquellenhalterung 7 mit der Lichtquelle 6 gleichmäßig umströmt, so daß die Wärme optimal abgeführt werden kann.

## Patentansprüche

1. Handpolymerisationsgerät zur Polymerisation von Kunststoffen, insbesondere von Dentalkunststoffen, mit einem Gehäuse, in dem eine Lichtquelle und ein Gebläse angeordnet sind und das eine Lichtaustrittsöffnung zum Aussenden des von der Lichtquelle erzeugten Lichts sowie Öffnungen zum Ein- und Auslaß von Kühlluft aufweist, dadurch gekennzeichnet, daß die Auslaßöffnungen (13) für Kühlluft Luftleitelemente (12) aufweisen, die in ihrer Lage zum Gehäuse (1) beweglich angeordnet sind.

2. Handpolymerisationsgerät nach Anspruch 1, dadurch gekennzeichnet, daß die Luftleitelemente (12) an einem der der Aussendung des Lichts dienenden Öffnung gegenüberliegenden Ende des Gehäuses (1) angeordnet sind.

3. Handpolymerisationsgerät nach Anspruch 1 oder 2, dadurch gekennzeichnet, daß die Luftleitelemente (12) schräg zu der Längsachse des Gehäuses (1) angeordnet sind.

4. Handpolymerisationsgerät nach einem der Ansprüche 1 bis 3, dadurch gekennzeichnet, daß mehrere Luftleitelemente (12) etwa parallel zueinander angeordnet sind.

5. Handpolymerisationsgerät nach einem der Ansprüche 1 bis 4, dadurch gekennzeichnet, daß die Luftleitelemente (12) auf einem gemeinsamen Rahmen (11) angeordnet sind, der an der Auslaßöffnung (13) für Kühlluft drehbar angeordnet ist.

6. Handpolymerisationsgerät nach einem der Ansprüche 1 bis 5, dadurch gekennzeichnet, daß die Luftleitelemente (12) starr auf dem Rahmen (11) angeordnet sind.

7. Handpolymerisationsgerät nach einem der Ansprüche 1 bis 6, dadurch gekennzeichnet, daß das Gebläse (1) zwischen Lichtquelle (6) und Auslaßöffnungen (13) für Kühlluft angeordnet ist.
